# EUROPEAN PATENT SPECIFICATION

(11) **EP 1 640 214 B1**
(45) Date of publication and mention of the grant of the patent: **27.02.2008**
(21) Application number: 05018083.5
(22) Date of filing: 19.08.2005
(51) Int. Cl.: B60Q 5/00

(54) **Horn switch gear, airbag system comprising this Horn switch gear, and steering device comprising this horn switch gear**
Hupenschalter, Airbag mit diesem Hupenschalter, und Lenkeinrichtung mit diesem Schalter
Interrupteur d'avertisseur sonore, coussin gonflable équipé de cet interrupteur, volant de direction équipé de cet interrupteur

(30) Priority: 24.09.2004 JP 2004277288
(43) Date of publication of application: 29.03.2006
(73) Proprietor: TAKATA CORPORATION, Minato-ku, Tokyo 106-8510 (JP)
(72) Inventor: Tsujimoto, Kei, Tokyo 106-8510 (JP); Matsui, Yoshitaka, Tokyo 106-8510 (JP); Nakazawa, Wataru, Tokyo 106-8510 (JP)
(74) Representative: Banzer, Hans-Jörg

(56) References cited:
- EP-A- 0 390 029
- EP-A- 1 099 604
- DE-U1-8202004 010 09
- US-A1- 2004 099 517
- US-B1- 6 199 908

## Description

The present invention relates to a construction of a horn switch gear mounted to a steering wheel for vehicles, and an airbag system or steering device employing the same.

US 2004/0099517 describes an airbag system according to the preamble of claim 1.

A steering device structure in which a horn mechanism is mounted to a steering wheel for vehicles is known (for example, see Japanese Unexamined Patent Application Publication No. 10-100832) .

The steering device described in Japanese Unexamined Patent Application Publication No. 10-100832 is constructed such that when an airbag cover that is a depression part is depressed by a vehicle's occupant, a moving contact is brought into contact with a fixed contact, operating the horn mechanism to blow a horn.

Japanese Unexamined Patent Application Publication No. 10-100832 presents a concrete structure in which a horn mechanism is mounted on a steering wheel for a vehicle. This type of gear has a keen demand for a technique to achieve rationalization by minimizing the number of components.

The present invention has been made in light of such circumstances, and has as an object the provision of a technique advantageous in reducing the number of components in a horn switch gear mounted to a steering wheel for vehicles.

In order to achieve the above-mentioned object, the present invention has been made. The invention can be applied to a construction technique for a horn switch gear mounted to a steering wheel for vehicles such as cars.

More specifically, this object is achieved by an airbag system according to Claim 1, and a steering device according to Claim 6. The dependent claims define preferred or advantageous embodiments of the invention.

The term "depression part" typically includes a module cover (module pad) that covers the airbag of the steering wheel from the occupant side, a horn operating cover used only to activate the horn, and a horn operating button (switch). The term "steering-wheel side member" broadly includes the steering wheel itself and various members fixed to the steering wheel. The term "depression-part side member" broadly includes a depression part that is directly depressed at depression of the horn and various members fixed to the depression part.

The horn switch gear according to the invention has a structure in which the gear is designed to be fixed to the depression-part side member via first fixing means, and the first fixing means is designed to also be used as second fixing means for fixing a plurality of the depression-part side members. As the first fixing means and the second fixing means, typically, a bolt-nut structure, a rivet structure, or the like is used.

Since the horn switch gear according to this aspect of the invention uses the first fixing means also as the second fixing means, the number of components can be reduced, increasing the versatility of the components to reduce the cost, thereby achieving rationalization.

According to another aspect of the invention, a horn switch gear includes at least a plurality of plate-like horn plates; first support means; second support means; and biasing means in the position where the steering-wheel side member and the depression-part side member are opposed to each other.

The plurality of plate-like horn plates of this aspect of the invention is joined together with a rotation shaft and is allowed to rotate around the rotation shaft.

The first support means of this aspect of the invention supports a first support section of the horn plates and is fixed to the steering-wheel side member. In other words, the horn plates are fixed to the steering-wheel side member via the first support means. The second support means fixes a second support section of the horn plates, different from the first support section, and, in use, is fixed to the depression-part side member via the first fixing means. In other words, in use, the horn plates are fixed to the depression-part side member via the first support means and the second support means. Here the term "support the horn plates" broadly includes a structure in which the horn plates are clamped from both sides and a structure in which the horn plates are supported from the top or bottom.

The biasing means of this aspect of the invention is a means for biasing the horn plates so as to rotate around the rotation shaft in a first rotating direction. The biasing means only has to have a biasing force that rotates the horn plates in the first rotating direction and its biasing position is not limited. For example, the biasing means may directly bias the horn plates themselves or, alternatively, the biasing means may bias the rotation shaft of the horn plates. As the biasing means, a spring, a damper mechanism, and means using the restoring force of the material itself may be used.

According to this aspect of the invention, the depression-part side member is brought close to the steering-wheel side member by the depression of the depression part to move the first support means and the second support means relatively. At that time, the horn plates rotate in a second rotating direction opposite to the first rotating direction around the rotation shaft against the biasing force of the biasing means, with the first support section supported to the steering wheel side by the first support means and the second support section supported to the depression part side by the second support means. Thus the first horn switch contact and the second horn switch contact are brought into contact with each other to blow the horn. On the other hand, the depression-part side member is separated from the steering-wheel side member by releasing the depression of the depression part to move the first support means and the second support means relatively. At that time, the horn plates rotate in the first rotating direction around the rotation shaft by the biasing force of the biasing means, with the first support section supported to the steering wheel side by the first support means and the second support section supported to the depression part side by the second support means. Thus the contact between the first horn switch contact and the second horn switch contact is released to stop the blow of the horn. The direction in which the first support means and the second support means move relatively at depression of the depression part or cancellation of the depression may either agree with the relative moving direction of the depression-part side member and the steering-wheel side member or may be different from it.

With the horn switch gear according to this aspect of the invention, the horn plates rotate only in the first rotating direction or the second rotating direction around the rotation shaft, with the first support section supported to the steering wheel side by the first support means and the second support section supported to the depression part side by the second support means. Accordingly, the motion of the depression part is limited to one direction at the operation of the horn. Accordingly, whichever part of the depression part such as the center or the end, the occupant of the vehicle depresses, the pressure by the depression is applied evenly onto the depression part, allowing the pressure required to blow the horn to be maintained constant irrespective of the depression position of the depression part. Consequently, the operability of the horn can be improved by smoothing the motion of the depression part.

Also, since the motion of the depression part at the operation of the horn is limited to one direction, the gap formed between the outer periphery of the depression part and the steering wheel can be minimized, enhancing the appearance.

According to yet another aspect of the invention, the plurality of horn plates may be constructed of a pair of right and left horn plates. This structure reduces the cost by sharing two horn plates.

According to yet another aspect of the invention, the plurality of horn plates may be joined together to form a ring shape having a central hole, and the central hole is fitted on a horn-plate adjacent member. Here the term "the horn-plate adjacent member" broadly includes members adjacent to the horn plates with the horn plates assembled. A typical example of the horn-plate adjacent member is an inflator that is disposed in a position above and adjacent to the horn plates and supplies inflation gas to the airbag.

The structure according to this aspect of the invention can decrease the size of the devices in the direction in which the horn plates and the horn-plate adjacent member are adjacent to each other, achieving size reduction.

According to yet another aspect of the invention, the first support means may include first clamp means and the second support means may include second clamp means. The first clamp means is fixed to the steering-wheel side member while clamping the first support section of each horn plate from the top and bottom of the plate and allows the rotation of the horn plates around the rotation shaft in the clamped state. The second clamp means is fixed to the depression-part side member while clamping the second support section of each horn plate from the top and bottom of the plate and allows the rotation of the horn plates around the rotation shaft in the clamped state.

With this structure, the horn plates are securely supported while being clamped from the top and bottom, further smoothing the rotation around the rotation shaft.

According to the invention, an airbag system is according to claim 1 provided, which includes the horn switch gear; a vehicle airbag; a retainer; an inflator; an airbag cover; and a horn operating member. The vehicle airbag has the function of deploying in an occupant protection region in a collision. The retainer has the function of accommodating the vehicle airbag folded in a desired form in advance. The inflator serves as gas supply means for supplying inflation gas to the vehicle airbag. The airbag cover has the function of covering the part of the vehicle airbag adjacent to the occupant. In a vehicle collision, the airbag cover is cleaved by the deploying force of the vehicle airbag, allowing the vehicle airbag to deploy in the occupant protection region. The horn operating member is a member that is operated by the occupant when the horn is activated. In the airbag system according to the invention, the horn is activated by the depression of the horn operating member serving as the depression part and the operation of the horn is cancelled by canceling the depression of the horn operating member. The horn operating member typically includes a pad member, a button, and a switch.

According to this airbag system, the number of components of the horn switch gear in the airbag system is reduced.

According to another aspect of the invention, a steering device according to claim 6 is provided, which includes a steering wheel for steering a vehicle, to which the horn switch gear is mounted; a vehicle airbag; a retainer; an inflator; an airbag cover; and a horn operating member. Those components are disposed inside the outline of the steering wheel. The components, such as the vehicle airbag, the retainer, the inflator, the airbag cover, and the horn operating member, have the same structure as those described for the airbag system above. In the steering device, the horn is activated by the depression of the horn operating member serving as the depression part and the operation of the horn is cancelled by canceling the depression of the horn operating member.

According to this aspect of the invention, there is provided a steering device in which the number of components of the horn switch gear is reduced.

An embodiment of the steering device of the present invention will be specifically described hereinafter with reference to the drawings.
Fig. 1 is a plan view showing the appearance of a steering device according to an embodiment of the invention.
Fig. 2 is an exploded perspective view of an airbag module in Fig. 1.
Fig. 3 is a perspective view of the airbag module in Fig. 1, viewed from the back.
Fig. 4 is a perspective view of a link mechanism according to the embodiment.
Fig. 5 is an enlarged view of the part of the link mechanism in position S2 of Fig. 4.
Fig. 6 is a diagram of the link mechanism in Fig. 4 viewed from arrow A, showing a state before a horn pad is depressed
Fig. 7 is a diagram of the link mechanism in Fig. 4 viewed from arrow A, showing a state when the horn pad is depressed.

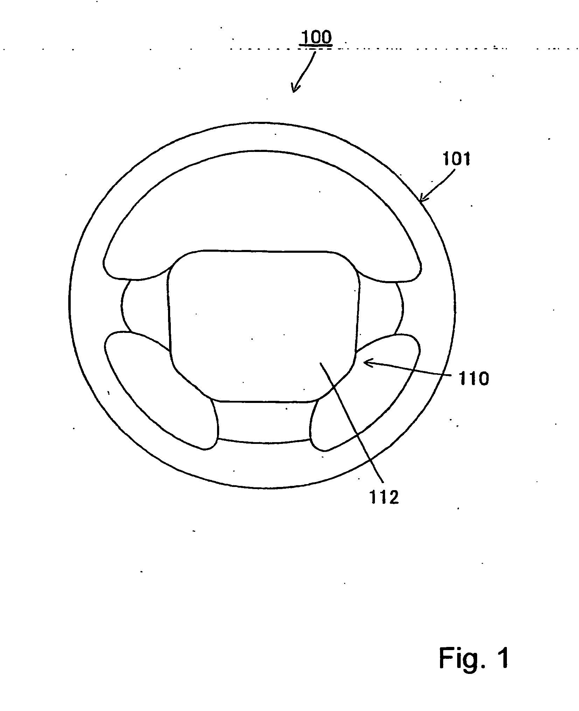

Referring to Figs. 1 to 7, a steering device 100 for cars, an embodiment of the steering device of the invention, will be described.

Fig. 1 is a plan view showing the appearance of the steering device 100 of this embodiment. As shown in Fig. 1, the steering device 100 of this embodiment principally includes a steering wheel 101 for an occupant to use for steering a vehicle, an airbag module 110 covered with a horn pad 112 inside the outline of the steering wheel 101, and a horn switch to be described later. The steering wheel 101 is constructed such that a ring-shaped metal core is coated with urethane resin. In the steering device 100, the horn pad 112 has the function of activating the horn switch by depression and also the function of covering the occupant side of an airbag 118, to be described later, and is also called "a module cover." The horn pad 112 serves as "the depression part" of the invention.

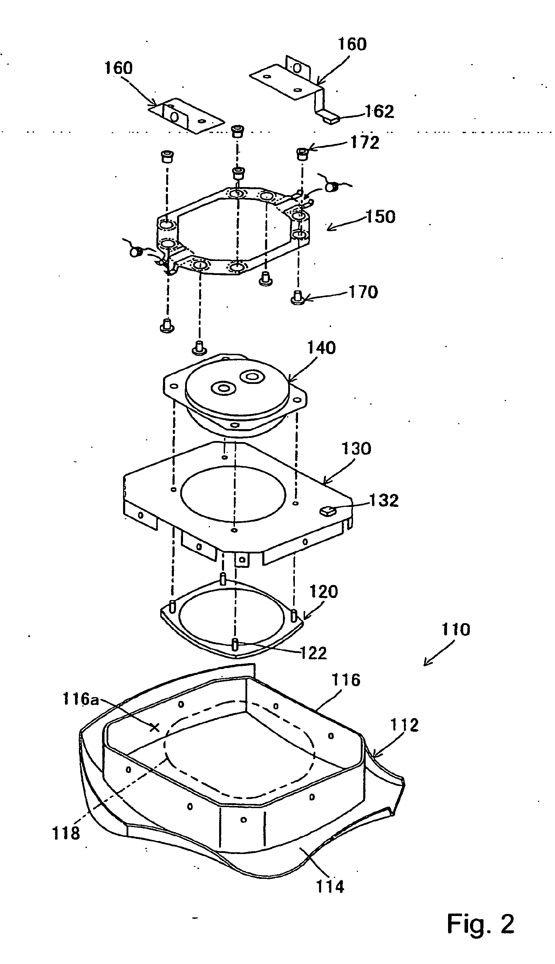

Fig. 2 is an exploded perspective view of the airbag module 110 of the steering device 100. As shown in Fig. 2, the horn pad 112 includes a cover flat part 114 serving as depression part to be depressed in operating the horn and a leg 116 that rises upright from the cover flat part 114. An accommodation space 116a partitioned by the leg 116 of the horn pad 112 accommodates principal components such as the airbag 118, a bag ring 120, a retainer 130, an inflator 140, a link mechanism 150, and a bracket 160 in modules on the back of the horn pad 112. The airbag module 110 serves as "the airbag system" of the invention.

The airbag 118 deploys toward an occupant protection region in a collision. The airbag 118 corresponds to "the vehicle airbag" of the invention. The airbag 118 is mounted to the retainer 130 via the bag ring 120. The airbag 118 that is folded in a specified form in advance is accommodated in the retainer 130. The inflator 140 has the function of supplying inflation gas to the airbag 118.

The link mechanism 150 is disposed on the part at which the bracket 160 as the steering wheel (101) side member and the retainer 130 as the horn pad (112) (depression part) side member are opposed. As will be described in detail later, the link mechanism 150 is fixed to the bracket 160 with guide bolts 170 to be screwed in the thread grooves of the bracket 160 and fixed to the fixing part of the steering wheel 101 via the bracket 160. Furthermore, the link mechanism 150 is fixed to the bag ring 120 with guide nuts 172 to be screwed on the threads 122 of the bag ring 120, with the retainer 130 and the inflator 140 interposed therebetween.

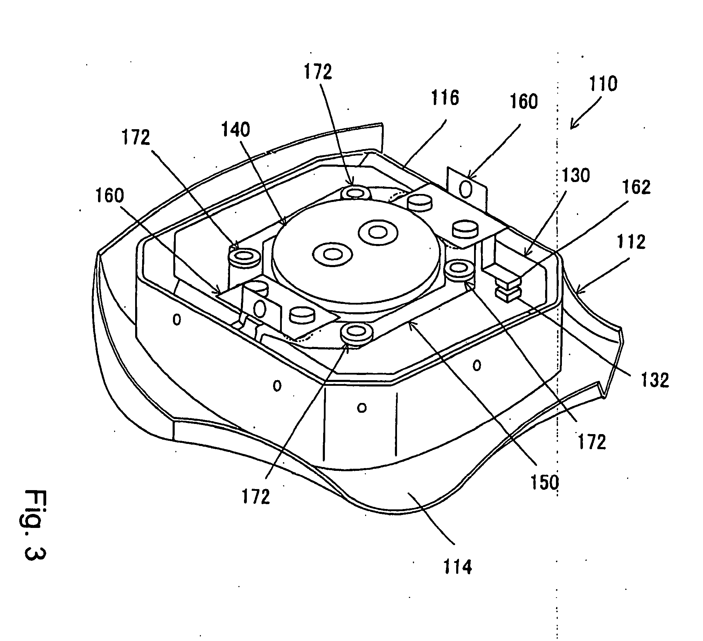

Fig. 3 shows the airbag module 110 viewed from the back. As shown in Fig. 3, the link mechanism 150 is fixed to the retainer 130 with the four guide nuts 172 and the bag ring 120. The guide nuts 172 and the bag ring 120 are also used as fixing means for fixing the inflator 140 to the retainer 130. Specifically, according to the embodiment, the guide nuts 172 and the bag ring 120 (a bolt-nut structure) are used as both fixing means for fixing the link mechanism 150 to the retainer 130 close to the horn pad 112 and fixing means for fixing the inflator 140 to the retainer 130 close to the horn pad 112. The guide nuts 172 and the bag ring 120 serve as "the first fixing means" and "the second fixing means" of the invention. In place of the bolt-nut structure, a rivet structure can be used.

The retainer 130 has a first horn switch contact 132 that constructs a horn switch. The bracket 160 has a second horn switch contact 162 that constructs the horn switch. The first horn switch contact 132 and the second horn switch contact 162 come into contact with each other via the link mechanism 150 that constructs the horn switch to turn on the horn switch, thereby blowing the horn.

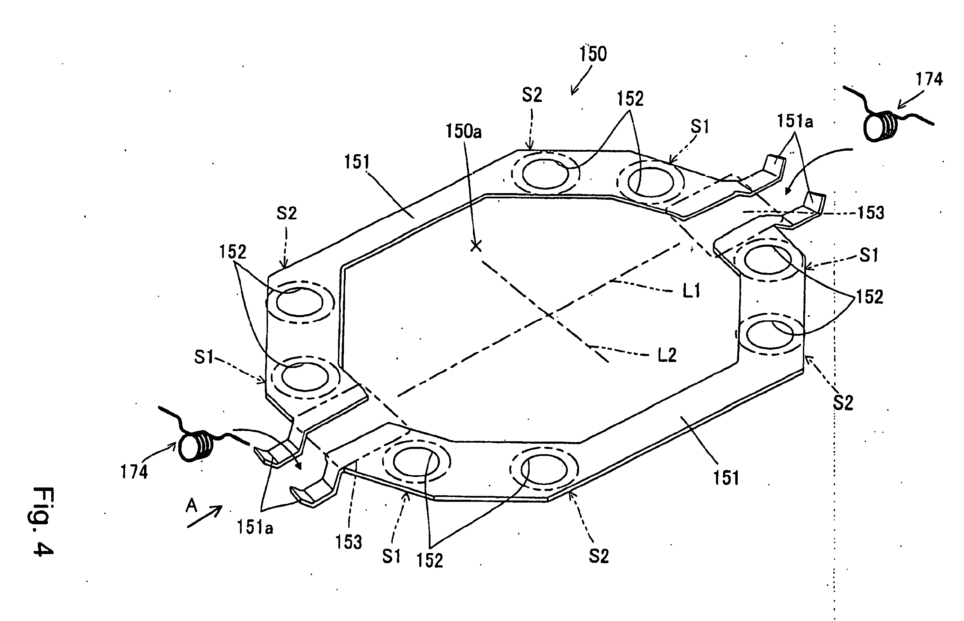

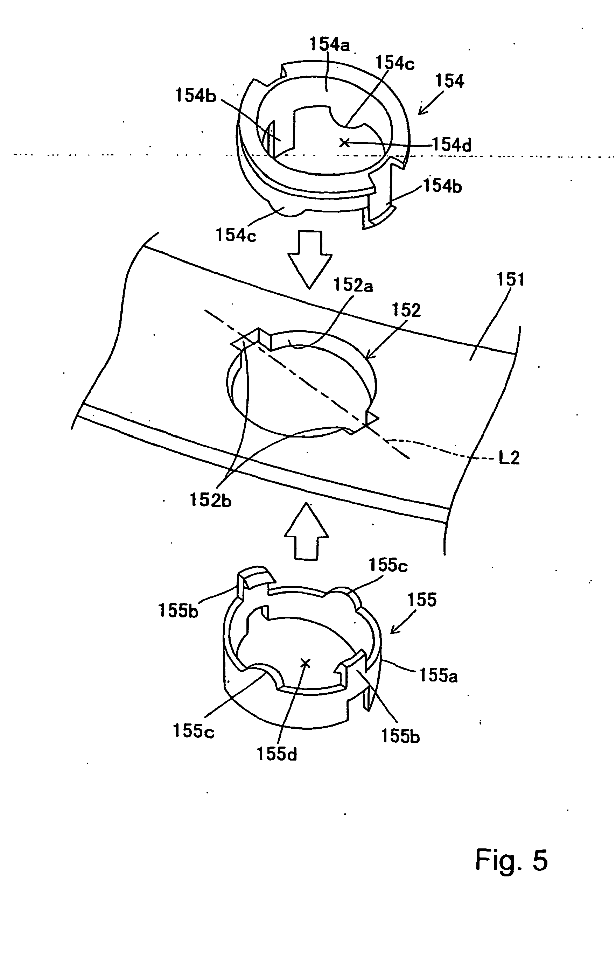

Referring to Figs. 4 and 5, the specific structure of the link mechanism 150 will be described. Fig. 4 is a perspective view of the link mechanism 150 according to the embodiment. Fig. 5 is an enlarged view of the part of the link mechanism 150 in position S2 of Fig. 4.

As shown in Fig. 4, the link mechanism 150 includes a pair of right and left (bilaterally symmetrical) plate-like horn plates 151. The horn plates 151 correspond to "the multiple horn plates" of the invention. The bilaterally symmetrical right and left horn plates 151 are effective to reduce the cost because they can be used in common. Each horn plate 151 has four through holes 152 in total. The horn plates 151 are joined together with joint members 153 at the ends 151a. The horn plates 151 joined with the joint members 153 form a ring shape having a central hole 150a. The central hole 150a is fitted on the projection of the inflator 140 disposed adjacent to the horn plates 151. Although not shown in the drawing, the pair of right and left horn plates 151 are disposed in a ring shape along the outline of the horn pad 112 in plan view. The central hole 150a of the horn plates 151 corresponds to "the central hole" of the invention. The inflator 140 corresponds to "the horn-plate adjacent member" of the invention.

As the details will be described later, the joint members 153 that join the horn plates 151 have two coil springs 174 for elastically biasing the both ends 151a of the horn plates 151. The coil springs 174 correspond to "the biasing means" of the invention.

As shown in Fig. 5, each through hole 152 has a circular part 152a and notches 152b at two places of the outer periphery of the circular part 152a. The notches 152b are formed on the axis (axis L2 in Figs. 4 and 5) orthogonal to the axis (axis L1 in Fig. 4) of the horn plates 151. In each through hole 152 at position S2 in Fig. 4, a first insulator 154 is fitted from above in Fig. 5 and a second insulator 155 is fitted from below in Fig. 5.

The first insulator 154 has a substantially cylindrical main body 154a having a hole 154d, claws 154b extending from two places of the main body 154a, and semicircular projections 154c extending from two places of the main body 154a. The second insulator 155 has a substantially cylindrical main body 155a having a hole 155d, claws 155b extending from two places of the main body 155a, and semicircular projections 155c extending from two places of the main body 155a. Both the first insulator 154 and the second insulator 155 are made of resin.

When the first insulator 154 and the second insulator 155 are fitted into each through hole 152, the claws 154b of the first insulator 154 are fitted in the notches 152b, and the claws 155b of the second insulator 155 are fitted in the notches 152b. Since the claws 154b of the first insulator 154 are fitted in the main body 155a of the second insulator 155, and the claws 155b of the second insulator 155 are fitted in the main body 154a of the first insulator 154, the first insulator 154 and the second insulator 155 are crimped to the horn plates 151 from both sides. In this crimped state, the semicircular projections 154c that project downward from the main body 154a of the first insulator 154 are in contact with the upper surface of the horn plates 151, while the semicircular projections 155c that project upward from the main body 155a of the second insulator 155 are in contact with the lower surface of the horn plates 151. The horn plates 151 are thus clamped from both sides by the first insulator 154 and the second insulator 155. The projections 154c of the first insulator 154 and the projections 155c of the second insulator 155 extend longitudinally along the axis L2. This allows the motion of the horn plates 151 relative to the first insulator 154 and the second insulator 155 by the cooperation of the projections 154c and the projections 155c, with the first insulator 154 and the second insulator 155 crimped to the horn plates 151. The motion follows the extending direction of the projections 154c and the projections 155c, thus being limited to the longitudinal section of the axis L2 on which the notches 152b of the through hole 152 are provided.

In this crimped state, the hole 154d of the first insulator 154 and the hole 155d of the second insulator 155 are disposed on top on one another at the upper part and the lower part of the through holes 152, forming a through hole as a whole. The through hole is used to pass the guide nut (the guide nut 172 in Fig. 2) for fixing the first insulator 154 and the second insulator 155 to the retainer 130 and the guide bolt (the guide bolt 170 in Fig. 2) for fixing them to the bracket 160 adjacent to the steering wheel 101 therethrough.

For each through hole 152 at position S1 in Fig. 4, or the through hole 152 closer to the end of the horn plate than to position S2, the positions of the first insulator 154 and the second insulator 155 are opposite vertically from that in position S2. Specifically, in the through hole 152 at position S1, the second insulator 155 is fitted from above in Fig. 5; the first insulator 154 is fitted from below in Fig. 5.

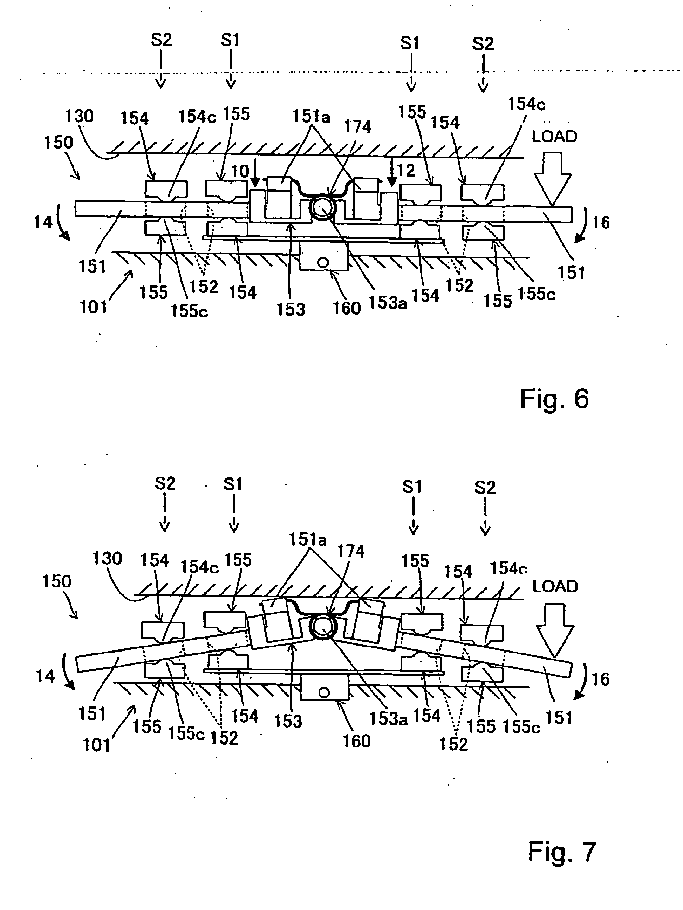

Figs. 6 and 7 show the link mechanism 150 in Fig. 4 viewed from arrow A, with the first insulators 154 and the second insulators 155 crimped to the horn plates 151. Fig. 6 shows a state before the horn pad 112 is depressed; and Fig. 7 shows a state when the horn pad 112 is depressed. Figs. 6 and 7 show the link mechanism 150 in Fig. 4 upside down.

As shown in Fig. 6, the link mechanism 150 is interposed between the steering wheel 101 and the retainer 130. In the link mechanism 150, the horn plates 151 are clamped at the positions of the through holes 152 by the projections 154c of the first insulator 154 and the projections 155c of the second insulator 155.

In the through hole 152 on the inside of Fig. 6, or at positions S1 in Fig. 4 (which corresponds to "the first support section" in the invention), the first insulator 154 and the second insulator 155 that clamp the horn plate 151 from both sides are fixed to the bracket 160 adjacent to the steering wheel 101 with the guide bolt (the guide bolt 170 in Fig. 2) fitted in the through hole 152. The first insulator 154 and the second insulator 155 at position S1 serve as "the first support means" and "the first clamp means" of the invention.

On the other hand, in the through hole 152 on the outside in Fig. 6, or at position S2 in Fig. 4 (which corresponds to "the second support section" of the invention), the first insulator 154 and the second insulator 155 that clamp the horn plate 151 from both sides are fixed to the retainer 130 with the guide nut (the guide nut 172 in Fig. 2) fitted in the through hole 152. The first insulator 154 and the second insulator 155 at position S2 serve as "the second support means" and "the second clamp means" in the invention.

The horn plates 151 can rotate around the rotation shaft 153a (which corresponds to "the rotation shaft" in the invention) of the joint member 153, whose ends 151a are elastically biased in the direction of arrow 10 or arrow 12 by the coil springs 174. In other words, the coil springs 174 have the function of elastically biasing the horn plates 151 so as to rotate in the direction opposite to arrow 14 or arrow 16 in Fig. 6 (which corresponds to "the first rotating direction" in the invention). The rotation shaft 153a of the joint member 153 has a cylindrical mounting part, on which the winding part of the coil spring 174 is fitted to fix the coil spring 174 to the joint member 153.

When the horn pad 112 is depressed to blow the horn in the state of Fig. 6, the load is applied to the part substantially in the center of each horn plate 151 (the right and left ends in Fig. 6) of the link mechanism 150 via the retainer 130. At that time, the lower surface of the retainer 130 moves toward the upper surface of the steering wheel 101 (downward in Fig. 6), and with this motion, the first insulator 154 and the second insulator 155 disposed outside in Fig. 6, which are fixed to the retainer 130, are also moved downward in Fig. 6. In other words, the first insulator 154 and the second insulator 155 disposed outside in Fig. 6 (at position S2 in Fig. 4) move relative to the first insulator 154 and the second insulator 155 disposed inside in Fig. 6 (at position S1 in Fig. 4). Accordingly, the horn plates 151 can rotate in a specified direction (in the direction of arrow 14 or arrow 16 in Fig. 6) around the rotation shaft 153a while being clamped by the projection 154c of the first insulator 154 and the projection 155c of the second insulator 155. Thus, as shown in Fig. 7, the horn plates 151 rotate in the direction of arrow 14 or arrow 16 (which corresponds to "the second rotating direction in the invention") against the elastically biasing force of the coil spring 174 around the rotation shaft 153a of the joint member 153. At that time, according to the embodiment, the first horn switch contact 132 of the retainer 130 and the second horn switch contact 162 of the bracket 160, shown in Fig. 2, move relatively in the direction in which they come close to each other. Since the first horn switch contact 132 and the second horn switch contact 162 come into contact with each other, the horn switch is turned on to blow the horn.

When the depression of the horn pad 112 is released to cancel the operation of the horn in the state of Fig. 7, the load applied to the horn plates 151 by depression is decreased. At that time, the lower surface of the retainer 130 moves in the direction separating from the upper surface of the steering wheel 101 (upward in Fig. 7), with which the first insulator 154 and the second insulator 155 disposed outside in Fig. 7 (at position S2 in Fig. 4), which are fixed to the retainer 130, are also moved upward in Fig. 7. Accordingly, the horn plates 151 rotate in the direction opposite to arrow 14 or arrow 16 by the elastically biasing force of the coil spring 174 around the rotation shaft 153a of the joint member 153 while being clamped by the projection 154c of the first insulator 154 and the projection 155c of the second insulator 155. Thus, the horn plate 151 returns from the state shown in Fig. 7 to the state shown in Fig. 6. At that time, according to the embodiment, the first horn switch contact 132 of the retainer 130 and the second horn switch contact 162 of the bracket 160, shown in Fig. 2, move relatively in the direction in which they separate from each other. Since the contact of the first horn switch contact 132 and the second horn switch contact 162 is released, the horn switch is turned off to stop the blow of the horn.

As has been described, in the steering device that mounts the link mechanism 150 of the embodiment, since the guide nuts 172 and the bag ring 120 serve as both fixing means for fixing the link mechanism 150 to the retainer 130 and fixing means for fixing the inflator 140 to the retainer 130, the number of components can be reduced, increasing the versatility of the components to decrease the cost, thereby achieving the rationalization of the device.

According to the embodiment, the motion of the horn pad (module cover) 112 during the operation of the horn is limited to one direction by the rotation of the horn plates 151 in a specified direction (in the direction of arrow 14 or arrow 16 in Fig. 6). Also, the embodiment uses a structure in which the pair of right and left horn plates 151 is disposed in ring form along the outline of the horn pad 112 in plan view. Accordingly, whichever part of the horn pad 112 such as the center or the end, the occupant of the vehicle depresses, the pressure by the depression is applied evenly onto the horn pad 112, allowing the pressure required to blow the horn to be maintained constant irrespective of the depression position of the horn pad 112, thus smoothing the motion (increasing the operability of the horn).

According to the embodiment, since the motion of the horn pad 112 is limited to one direction during the operation of the horn, the gap between the outer periphery of the horn pad 112 and the steering wheel 101 can be minimized, enhancing the appearance of the steering device.

According to the embodiment, since the central hole 150a formed by the horn plates 151 is fitted on the projection of the inflator 140, the space in which the existing airbag module 110 is to be disposed can be used effectively, and the structure in which the horn plates 151 are disposed around the inflator 140 is particularly effective in reducing the height. This is therefore advantageous in reducing the height of an airbag system and a steering device to achieve size reduction.

The invention is not limited to the foregoing embodiment but various applications and modifications can be made. For example, the following applications can be made.

The foregoing embodiment has been described for the case in which the link mechanism is constructed of two horn plates. Alternatively, the invention may construct the link mechanism by combining three or more horn plates as appropriate.

The foregoing embodiment has been described for the case in which the horn plates are fitted on the projection of the inflator 140 adjacent to the horn plates through the central hole. Alternatively, the invention may use a structure in which the horn plates are not fitted on the projection of the inflator 140.

Although in the embodiment the coil springs 174 are used as biasing means for biasing the horn plates 151, the invention may use other means as the biasing means, such as a leaf spring with a known structure, a damper mechanism (using air pressure or fluid pressure), and means using the restoring force of the material itself.

Although in the embodiment the structure of the steering device of a car has been described, the invention is a technique applicable to the structure of the steering device of vehicles other than a car, for example, vessels and trains.

## Claims

1. An airbag system, comprising:
a vehicle airbag (118) that deploys in an occupant protection region in a collision;
a retainer (130) that accommodates the vehicle airbag (118) folded in a desired form in advance;
an inflator (140) that supplies inflation gas to the vehicle airbag (118);
an airbag cover (112) that covers the part of the vehicle airbag (118) adjacent to the occupant; and
a horn operating member (112),
wherein a horn is activated by the depression of the horn operating member (112) serving as a depression part and the operation of the horn is cancelled by canceling the depression of the horn operating member (112),
a horn switch gear provided in use in the position on a steering wheel for vehicles at which a steering-wheel side member (160) and a plurality of depression-part side members are opposed to each other, in which a first horn switch contact (132) and a second horn switch contact (162) are brought into contact with each other by the depression of the depression part (112) at operation of a horn to blow the horn, and in which the contact of the first horn switch contact (132) and the second horn switch contact (162) is released by canceling the depression of the depression part (112) to release the operation of the horn, wherein
the gear is fixed to the retainer (130), which is one of the plurality of depression-part side members via first fixing means (120, 172) ;
**characterized in that**
said inflator (140) is fixed to said retainer (130) via said first fixing means (120, 172), being therefore also used as second fixing means for fixing a plurality of the depression-part side members.

2. The airbag system according to Claim 1, wherein the horn switch gear comprises:
a plurality of plate-like horn plates (151) that is joined together with a rotation shaft (153a) and is allowed to rotate around the rotation shaft (153a); first support means (154, 155, 170) that supports a first support section (S1) of the horn plates (151) and is fixed to the steering-wheel side member (160); second support means (154, 155, 172) that fixes a second support section (S2) of the horn plates (151), different from the first support section (S1), and is fixed to a depression-part side member via the first fixing means (120, 172); and biasing means (174) that biases the horn plates (151) so as to rotate around the rotation shaft (153a) in a first rotating direction; wherein the horn switch gear is designed such that
when the depression-part side member is brought close to the steering-wheel side member (160) by the depression of the depression part (112) to move the first support means and the second support means relatively, the horn plates (151) rotate in a second rotating direction opposite to the first rotating direction around the rotation shaft (153a) against the biasing force of the biasing means (174), with the first support section (S1) supported to the steering wheel side by the first support means (154, 155, 170) and the second support section (S2) supported to the depression part side by the second support means (154, 155, 172), to bring the first horn switch contact (132) into contact with the second horn switch contact (162); and
when the depression-part side member is separated from the steering-wheel side member (160) by releasing the depression of the depression part (112) to move the first support means and the second support means relatively, the horn plates (151) rotate in the first rotating direction around the rotation shaft (153a) by the biasing force of the biasing means (174), with the first support section (S1) supported to the steering wheel side by the first support means (154, 155, 170) and the second support section (S2) supported to the depression part side by the second support means (154, 155, 172), to release the contact between the first horn switch contact (132) and the second horn switch contact (162).

3. The airbag system according to Claim 2, wherein
the plurality of horn plates (151) are constructed of a pair of right and left horn plates.

4. The airbag system according to Claim 2 or 3,
wherein
the plurality of horn plates (151) are joined together to form a ring shape having a central hole (150a), the central hole (150a) being fitted on a horn-plate adjacent member (140).

5. The airbag system according to any one of Claims 2 to 4, wherein
the first support means (154, 155, 170) includes first clamp means (154, 155) that is fixed to the steering-wheel side member (160) while clamping the first support section (S1) of each horn plate (151) from the top and bottom of the plate and allows the rotation of the horn plates (151) around the rotation shaft (153a) in the clamped state; and
the second support means (154, 155, 172) includes second clamp means (154, 155) that is fixed to the depression-part side member while clamping the second support section (S2) of each horn plate (151) from the top and bottom of the plate and allows the rotation of the horn plates (151) around the rotation shaft (153a) in the clamped state.

6. A steering device comprising:
a steering wheel for steering a vehicle, to which the airbag system according to any one of Claims 1 to 5 is mounted;
wherein the horn operating member (112) is provided to the steering wheel.

## Patentansprüche

1. Airbagsystem, umfassend:
einen Fahrzeugairbag (118), welcher sich bei einem Zusammenstoß in einem Insassenschutzbereich entfaltet;
eine Halterung (130), welche den Fahrzeugairbag (118) aufnimmt, der im Voraus in einer gewünschten Form gefaltet wird; eine Aufblaseinrichtung (140), welche dem Fahrzeugairbag (118) Aufblasgas zuführt;
eine Airbagabdeckung (112), welche den dem Insassen benachbarten Teil des Fahrzeugairbags (118) abdeckt; und
ein Hupenbetätigungsteil (112),
wobei eine Hupe durch das Niederdrücken des Hupenbetätigungsteils (112), welches als ein Niederdrückteil dient, betätigt wird, und wobei die Betätigung der Hupe beendet wird, indem das Niederdrücken des Hupenbetätigungsteils (112) beendet wird,
eine Hupenschaltereinrichtung, welche im Gebrauch in der Position an einem Lenkrad für Fahrzeuge vorgesehen ist, an der ein lenkradseitiges Element (160) und eine Mehrzahl von niederdrückteilseitigen Elementen einander gegenüberliegen, wobei ein erster Hupenschalterkontakt (132) und ein zweiter Hupenschalterkontakt (162) durch das Niederdrücken des Niederdrückteils (112) bei einer Betätigung einer Hupe in Kontakt miteinander gebracht werden, um zu hupen, und wobei der Kontakt des ersten Hupenschalterkontakts (132) und des zweiten Hupenschalterkontakts (162) gelöst wird, indem das Niederdrücken des Niederdrückteils (112) beendet wird, um die Betätigung der Hupe zu lösen,
wobei die Einrichtung an der Halterung (130), welche eines der Mehrzahl von niederdrückteilseitigen Elementen ist, über erste Befestigungsmittel (120, 172) befestigt ist;
**dadurch gekennzeichnet,**
**dass** die Aufblaseinrichtung (140) an der Halterung (130) über die ersten Befestigungsmittel (120, 172) befestigt ist, welche daher auch als zweite Befestigungsmittel zum Befestigen einer Mehrzahl der niederdrückteilseitigen Elemente verwendet werden.

2. Airbagsystem nach Anspruch 1, wobei die Hupenschaltereinrichtung umfasst:
eine Mehrzahl von plattenartigen Hupenplatten (151), welche mit einer Drehachse (153a) miteinander verbunden ist und sich um die Drehachse (153a) drehen kann; erste Stützmittel (154, 155, 170), welche einen ersten Stützabschnitt (S1) der Hupenplatten (151) stützen und an dem lenkradseitigen Element (160) befestigt sind; zweite Stützmittel (154, 155, 172), welche einen von dem ersten Stützabschnitt (S1) verschiedenen zweiten Stützabschnitt (S2) der Hupenplatten (151) befestigen und über die ersten Befestigungsmittel (120, 172) an einem niederdrückteilseitigen Element befestigt sind; und Vorspannmittel (174), welche die Hupenplatten (151) so vorspannen, dass sie sich in einer ersten Drehrichtung um die Drehachse (153a) drehen;
wobei die Hupenschaltereinrichtung derart ausgestaltet ist,
dass sich, wenn das niederdrückteilseitige Element durch das Niederdrücken des Niederdrückteils (112) in die Nähe des steuerradseitigen Elements (160) gebracht wird, um die ersten Stützmittel und die zweiten Stützmittel relativ zu bewegen, die Hupenplatten (151) in einer zu der ersten Drehrichtung entgegengesetzten zweiten Drehrichtung um die Drehachse (153a) gegen die Vorspannkraft der Vorspannmittel (174) drehen, wobei der erste Stützabschnitt (S1) an der Lenkradseite durch die ersten Stützmittel (154, 155, 170) gelagert ist und der zweite Stützabschnitt (S2) an der Niederdrückteilseite durch die zweiten Stützmittel (154, 155, 172) gelagert ist, um den ersten Hupenschalterkontakt (132) mit dem zweiten Hupenschalterkontakt (162) in Kontakt zu bringen; und
dass sich, wenn das niederdrückteilseitige Element von dem lenkradseitigen Element (160) getrennt wird, indem das Niederdrücken des Niederdrückteils (112) gelöst wird, um die ersten Stützmittel und die zweiten Stützmittel relativ zu bewegen, die Hupenplatten (151) durch die Vorspannkraft der Vorspannmittel (174) in der ersten Drehrichtung um die Drehachse (153a) drehen, wobei der erste Stützabschnitt (S1) an der Lenkradseite durch die ersten Stützmittel (154, 155, 170) gelagert ist und der zweite Stützabschnitt (S2) an der Niederdrückteilseite durch die zweiten Stützmittel (154, 155, 172) gelagert ist, um den Kontakt zwischen dem ersten Hupenschalterkontakt (132) und dem zweiten Hupenschalterkontakt (162) zu lösen.

3. Airbagsystem nach Anspruch 2, wobei die Mehrzahl von Hupenplatten (151) aus einem Paar von rechten und linken Hupenplatten ausgebildet sind.

4. Airbagsystem nach Anspruch 2 oder 3, wobei die Mehrzahl von Hupenplatten (151) miteinander verbunden ist, um eine Ringform mit einem zentralen Loch (150a) auszubilden, wobei das zentrale Loch (150a) auf ein einer Hupenplatte benachbartes Element (140) aufgepasst ist.

5. Airbagsystem nach einem der Ansprüche 2-4,
wobei die ersten Stützmittel (154, 155, 170) erste Klemmmittel (154, 155) umfassen, welche an dem lenkradseitigen Element (160) befestigt sind, während sie den ersten Stützabschnitt (S1) jeder Hupenplatte (151) von der Oberseite und der Unterseite der Platte einklemmen, und die Drehung der Hupenplatten (151) um die Drehachse (153a) in dem eingeklemmten Zustand erlauben; und
wobei die zweiten Stützmittel (154, 155, 172) zweite Klemmmittel (154, 155) umfassen, welche an dem niederdrückteilseitigen Element befestigt sind, während sie den zweiten Stützabschnitt (S2) jeder Hupenplatte (151) von der Oberseite und der Unterseite der Platte einklemmen, und die Drehung der Hupenplatten (151) um die Drehachse (153a) in dem eingeklemmten Zustand erlauben.

6. Lenkvorrichtung, umfassend:
ein Lenkrad zum Lenken eines Fahrzeugs, an welchem das Airbagsystem nach einem der Ansprüche 1-5 angebracht ist;
wobei das Hupenbetätigungsteil (112) an dem Lenkrad vorgesehen ist.

## Revendications

1. Un système de coussin de sécurité gonflable, comprenant :
- un coussin de sécurité gonflable pour véhicule (118) qui se déploie dans une zone de protection d'un occupant lors d'une collision ;
- un dispositif de maintien (130) qui contient le coussin de sécurité gonflable pour véhicule (118) replié dans une forme désirée à l'avance ;
- un gonfleur (140) qui fournit le gaz de gonflage au coussin de sécurité gonflable pour véhicule (118) ;
- un couvercle de coussin de sécurité gonflable (112) qui couvre la partie du coussin de sécurité gonflable pour véhicule (118) adjacente à l'occupant ; et
- un élément d'actionnement d'avertisseur sonore (112),
dans lequel un avertisseur sonore est activé par l'enfoncement de l'élément d'actionnement d'avertisseur sonore (112) servant d'une partie d'enfoncement et l'utilisation de l'avertisseur sonore est arrêtée en arrêtant l'enfoncement de l'élément d'actionnement d'avertisseur sonore (112),
- un dispositif de commutation d'avertisseur sonore disposé pour être utilisé dans la position sur un volant pour véhicules à laquelle un élément du côté du volant (160) et une pluralité d'éléments du côté de la partie d'enfoncement sont opposés les uns aux autres, dans lequel un premier contact de commutation d'avertisseur sonore (132) et un second contact de commutation d'avertisseur sonore (162) sont amenés en contact l'un avec l'autre par l'enfoncement de partie d'enfoncement (112) en cas d'actionnement d'un avertisseur sonore pour faire retentir l'avertisseur sonore, et dans lequel le contact du premier contact de commutation d'avertisseur sonore (132) et du second contact de commutation d'avertisseur sonore (162) est libéré en arrêtant l'enfoncement de la partie d'enfoncement (112) pour libérer l'utilisation de l'avertisseur sonore,
dans lequel l'équipement est fixé au dispositif de maintien (130) qui est l'un d'une pluralité d'éléments du côté de la partie d'enfoncement par un premier moyen de fixation (120, 172) ;
**caractérisé en ce que** ledit gonfleur (140) est fixé au dit dispositif de maintien (130) par l'intermédiaire dudit premier moyen de fixation (120, 172) étant donc également utilisé comme un second moyen de fixation destiné à fixer une pluralité d'éléments du côté de la partie d'enfoncement.

2. Le système de coussin de sécurité gonflable selon la revendication 1. dans lequel le dispositif de commutation d'avertisseur sonore comprend :
- une pluralité de plaques lamellaires d'avertisseur sonore (151) assemblées ensemble avec un axe de rotation (153a) et autorisées à tourner autour de l'axe de rotation (153a) ; un premier moyen de support (154, 155, 170) qui supporte une première section de support (S1) des plaques d'avertisseur sonore (151) et est fixé à l'élément du côté du volant (160) ; un second moyen de support (154, 155. 172) qui fixe une seconde section de support (S2) des plaques d'avertisseur sonore (151), différente de la première section de support (S1), et est fixé à un élément du côté de la partie d'enfoncement par le premier moyen de fixation (120, 172) j et un moyen de poussée (174) qui pousse les plaques d'avertisseur sonore (151) de façon à tourner autour de l'axe de rotation (1 53a) dans une première direction de rotation :
dans lequel le dispositif de commutation d'avertisseur sonore est conçu de telle sorte que :
- quand l'élément du côté de la partie d'enfoncement est rapproché de l'élément du côté du volant (160) par l'enfoncement de la partie d'enfoncement (112) pour déplacer le premier moyen de support et le second moyen de support relativement, les plaques d'avertisseur sonore (151) tournent dans une seconde direction de rotation opposée à la première direction de rotation autour de l'axe de rotation (153a) contre la force de poussée du moyen de poussée (174), la première section de support (S1 ) étant supportée sur le côté du volant par le premier moyen de support (154, 155. 170) et la seconde section de support (S2) supportée sur le côté de la partie d'enfoncement par le second moyen de support (154, 155, 172), pour amener le premier contact de commutation d'avertisseur sonore (132) en contact avec le second contact de commutation d'avertisseur sonore (162) : et
- quand l'élément du côté de la partie d'enfoncement est séparé de l'élément du côté du volant (160) en libérant l'enfoncement de la partie d'enfoncement (112) pour déplacer le premier moyen de support et le second moyen de support relativement, les plaques d'avertisseur sonore (151) tournent dans la première direction de rotation autour de l'axe de rotation (153a) par la force de poussée du moyen de poussée (174), la première section de support (S1) étant supportée sur le côté du volant par le premier moyen de support (154, 155, 170) et la seconde section de support (S2) étant supportée sur le côté de la partie d'enfoncement par le second moyen de support (154, 155, 172), pour libérer le contact entre le premier contact de commutation d'avertisseur sonore (132) et le second contact de commutation d'avertisseur sonore (162).

3. Le système de coussin de sécurité gonflable selon la revendication 2. dans lequel la pluralité de plaques d'avertisseur sonore (151) sont constituées d'une paire de plaques d'avertisseur sonore gauche et droite.

4. Le système de coussin de sécurité gonflable selon la revendication 2 ou 3, dans lequel la pluralité de plaques d'avertisseur sonore (151) sont assemblées ensemble pour former un anneau comprenant un trou central (150a), le trou central (150a) étant disposé sur un élément adjacent à la plaque d'avertisseur sonore (140).

5. Le système de coussin de sécurité gonflable selon l'une quelconque des revendications 2 à 4, dans lequel :
- le premier moyen de support (154, 155, 170) comprend un premier moyen de serrage (154, 155) qui est fixé à l'élément du côté du volant (160) tout en serrant la première section de support (S1) de chaque plaque d'avertisseur sonore (151) depuis la partie supérieure et inférieure de la plaque et permet la rotation des plaques d'avertisseur sonore (151) autour de l'axe de rotation (153a) dans l'état serré ; et
- le second moyen de support (154, 155, 172) comprend un second moyen de serrage (154, 155) qui est fixé à l'élément du côté de la partie d'enfoncement tout en serrant la seconde section de support (S2) de chaque plaque d'avertisseur sonore (151) depuis la partie supérieure et inférieure de la plaque et permet la rotation des plaques d'avertisseur sonore (151) autour de l'axe de rotation (153a) dans l'état serré.

6. Dispositif de direction comprenant un volant destiné à diriger un véhicule, sur lequel un système de coussin de sécurité gonflable selon l'une quelconque des revendications 1 à 5 est monté ; dans lequel l'élément d'actionnement d'avertisseur sonore (112) est disposé sur le volant.
